# EUROPÄISCHE PATENTANMELDUNG

(11) **EP 0 998 002 A2**
(43) Veröffentlichungstag der Anmeldung: **03.05.2000**
(21) Anmeldenummer: 99120542.8
(22) Anmeldetag: 15.10.1999
(51) Int. Cl.: H02H 1/06, H02H 7/26

(54) **Gleichspannungsversorgungseinheit**

(30) Priorität: 28.10.1998 DE 29819235 U
(71) Anmelder: SIEMENS AKTIENGESELLSCHAFT, 80333 München (DE)
(72) Erfinder: Schneider, Anton, 90471 Nürnberg (DE)

(57) **Zusammenfassung**

An einer internen Sammelschiene (7) für Gleichspannung ist eine geregelte Gleichspannungseinspeisevorrichtung (3) angeschlossen, die den Ausgangstrom (Ia) auf einen Begrenzungswert begrenzt. Ferner ist eine schnell abschaltende Sicherungseinrichtung (11,13) an der Sammelschiene angeschlossen und stellt einen eigensicheren Ausgang (15,19) für einen Verbraucher (17,21) bereit. Die Sicherungseinrichtung löst bei einem Verbraucherstrom (Iv) aus, der kleiner als der Begrenzungswert des Ausgangstromes (Ia) ist.

## Beschreibung

Seit vielen Jahren werden insbesondere bei industriellen Anwendungen z.B. im Schaltschrank- bzw. Schaltanlagenbau zur Versorgung von diversen elektrischen Gleichstromverbrauchern ungeregelte Gleichspannungen z.B. mit einem Wert von 24V eingesetzt. Dabei ist es insbesondere zum Schutze von Verbrauchern und Leitungen für Elektriker üblich, den Verbrauchern Sicherungsautomaten vorzuschalten. Bei einem Kurzschluß im Verbraucherzweig lösen diese erfahrungsgemäß dann schnell aus, wenn der Verbraucherstrom im Fehlerfalle etwa auf das 5 bis 10 fache des Sicherungsnennstromes angestiegen ist.

In zunehmender Weise werden aber elektrische Verbraucher und Systeme immer empfindlicher. Dies hat zur Folge, daß zu deren Energieversorgung geregelte Gleichspannungsversorgungsgeräte, auch Gleichspannungseinspeisevorrichtungen genannt, eingesetzt werden müssen, bei denen zumindest der Ausgangstrom im Falle eines Fehlers, insbesondere eines Kurzschlusses, auf einen relativ niedrigen Begrenzungswert begrenzt wird. Die Verwendung von geregelten Gleichspannungseinspeisevorrichtungen wird weiter dadurch gefördert, daß damit eine einfache Anpassung an sehr unterschiedliche Netzspannungen und damit ein weltweiter Einsatz ermöglicht wird.

Derartige geregelte Gleichspannungseinspeisevorrichtungen weisen z.B. zum Eigenschutz eine elektronische Strombegrenzung auf, so daß bei einem Kurzschluß im Zweig des Verbrauchers der Ausgangstrom im allgemeinen nicht wesentlich über den Nennstromwert der Gleichspannungseinspeisevorrichtung ansteigt. Ist bei einer derartigen Anordnung der Verbraucher über einen Sicherungsautomaten gesichert, so tritt das Problem auf, daß nicht mehr in jedem Falle der zum schnellen Auslösen des Sicherungsautomaten benötigte Überstrom erreicht wird. Vielmehr wirkt die elektronische Strombegrenzung der geregelten Gleichspannungseinspeisevorrichtung in diesem Fall der Entstehung eines für eine Auslösung des Sicherungsautomaten ausreichend großen Verbraucherfehlerstromes entgegen.

Der Erfindung liegt die Aufgabe zu Grunde, eine Gleichspannungsversorgungseinheit anzugeben, bei der auch bei Einsatz einer geregelten Gleichspannungseinspeisevorrichtung der das oben angeführte Problem nicht auftritt.

Die Aufgabe wird gelöst mit einer Gleichspannungsversorgungseinheit, welche die Merkmale von Anspruch 1 aufweist.

Die erfindungsgemäße Gleichspannungsversorgungseinheit enthält eine interne Sammelschiene für deren Gleichspannung. Diese wird von mindestens einer geregelten Gleichspannungseinspeisevorrichtung in die Sammelschiene eingespeist. Dabei ist die Gleichspannungseinspeisevorrichtung so geregelt, daß zumindest deren Ausgangstrom auf einen Begrenzungswert begrenzt wird. Ferner ist mindestens eine schnell abschaltende, insbesondere elektronische Sicherungseinrichtung vorhanden. Diese ist eingangseitig an der Sammelschiene angeschlossen und stellt ausgangseitig mindestens einen eigensicheren Ausgang zum Anschluß von externen elektrischen Verbrauchern bereit. Die Sicherungseinrichtung ist zum Überlastschutz so ausgelegt, daß diese bei einem Wert des Verbraucherstromes auslöst, der kleiner ist der Begrenzungswert des Ausgangstromes der geregelten Gleichspannungseinspeisevorrichtung.

Durch die erfindungsgemäße Kombination einer geregelten Gleichspannungseinspeisevorrichtung mit einer schnell abschaltenden Sicherungseinrichtung über eine interne Sammelschiene kann ein Kurzschluß schnell und zuverlässig erkannt und abgeschaltet werden. Dadurch kann ein Verbraucher, welcher einen Kurzschluß aufweist, abgetrennt werden, ohne daß die Gleichspannung am Ausgang der Gleichspannungseinspeisevorrichtung, d.h. die Gleichspannung auf der internen Sammelschiene, einbricht. Ferner sind keine Konflikte mit der den Ausgangstrom auf einen Begrenzungswert begrenzenden Regelung der Gleichspannungseinspeisevorrichtung zu befürchten.

Die erfindungsgemäße Gleichspannungsversorgungseinheit ist besonders dann vorteilhaft, wenn an der internen Sammelschiene mehrere schnell abschaltende Sicherungseinrichtungen angekoppelt sind und hiermit jeweils separate eigensichere Ausgänge der Gleichspannungsversorgungseinheit zum Anschluß selbständiger Verbraucherzweige bereitgestellt werden. Ist einer dieser Verbraucherzweige durch einen Kurzschluß gestört, so wird dieser von der Sammelschiene über die zugeordnete Sicherungseinrichtung so schnell abgetrennt, daß der Wert der Gleichspannung auf der Sammelschiene nicht beeinträchtigt und somit die anderen Verbraucherzweige nicht gestört werden. Ferner spricht die integrierte Ausgangstrombegrenzung der geregelten Gleichspannungseinspeisevorrichtung nicht in dem Maße an, daß hierdurch die Kurzschlußabschaltung über die Sicherungseinrichtungen beeinträchtigt wäre.

Die erfindungsgemäße Kombination der Elemente in der Gleichspannungsversorgungseinheit ermöglicht es, in der Praxis häufig mehrere parallele geregelte Gleichspannungseinspeisevorrichtungen über eine interne Sammelschiene zu einem redundanten Versorgungssystem für Gleichspannung zusammenzuschalten, welches eigensichere Anschlüsse für externe Verbraucher bereitstellt. Besonders vorteilhaft können in einem derartigen System die Vorteile von geregelten Gleichspannungseinspeisevorrichtungen gegenüber ungeregelten Vorrichtungen ausgenutzt werden. Diese liegen insbesondere in der einfachen Möglichkeit der Bereitstellung von Ausgangsgleichspannungen mit unterschiedlichen Werten und der Ausgangstrombegrenzung begründet. Vorteilhaft speist die geregelte Gleichspannungseinspeisevorrichtung eine Gleichspannung mit stabilisiertem Spannungswert in die interne Sammelschiene ein. Vorteilhaft wird als geregelte Gleichspannungseinspeisevorrichtung ein elektronisch geregeltes Schaltnetzteil eingesetzt.

Die Erfindung weist den weiteren Vorteil auf, daß die elektrischen Verbraucher an den eigensicheren Ausgängen keine separate Sicherung z.B. in Form eines Sicherungsautomaten aufzuweisen brauchen. Vielmehr ist der elektrische Schutz der Verbraucher gegen Kurzschlüsse in Form der schnell abschaltenden Sicherungseinrichtungen in die erfindungsgemäße Gleichspannungsversorgungseinheit integriert. Vorteilhaft können als schnell abschaltende Sicherungseinrichtungen elektronischen Schutzschaltrelais eingesetzt werden.

Schließlich bietet die erfindungsgemäße Gleichspannungsversorgungseinheit den Vorteil, daß die an der internen Sammelschiene angekoppelten Gleichspannungseinspeisevorrichtungen und schnell abschaltenden Sicherungseinrichtungen bezüglich ihrer elektrischen Kennwerte so aufeinander abgestimmt sind, daß insbesondere im Falle eines Kurzschlusses in einem Verbraucher in jedem Falle die Eigensicherung und Kurzschlußschnellabschaltung gewährleistet ist. Ein z.B. im Schaltschrankbau tätiger Elektriker läuft somit nicht Gefahr, versehentlich bezüglich elektrischer Kennwerte nicht zueinander kompatible Gleichspannungseinspeisevorrichtungen und Sicherungseinrichtungen zusammenzuschalten. Bei Einsatz einer Gleichspannungsversorgungseinheit gemäß der Erfindung ist die elektrische Abstimmung der Komponenten gewährleistet. Vorteilhaft liegt hierzu der Begrenzungswert für den Ausgangstromwert einer geregelten Gleichspannungseinspeisevorrichtung nur geringfügig über deren Nennstromwert.

Die Erfindung wird desweiteren anhand von Ausführungsbeispielen, welche in den nachfolgend kurz angeführten Figur dargestellt sind, weiter erläutert. Dabei zeigt
- Figur 1: ein Prinzipschaltbild der erfindungsgemäßen Gleichspannungsversorgungseinheit, und
- Figur 2: eine beispielhafte Ausführung der erfindungsgemäßen Gleichspannungsversorgungseinheit.

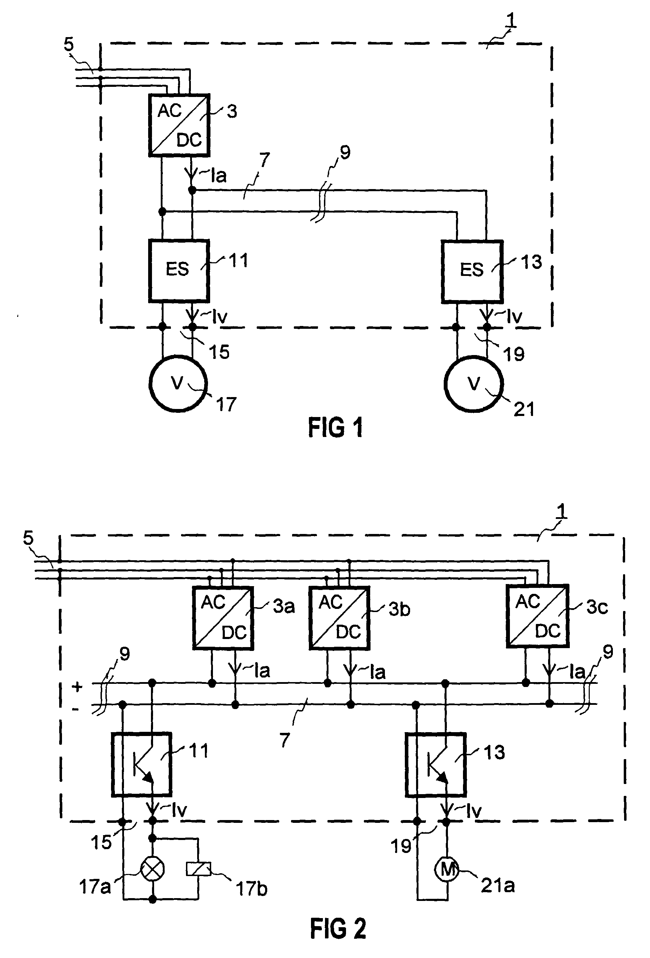

Figur 1 zeigt das Prinzipschaltbild einer Gleichspannungsversorgungseinheit 1 gemäß der Erfindung. Diese wird gespeist von einem Wechselspannungsnetz 5 und stellt beispielhaft zwei eigensichere Verbraucherausgänge 15,19 bereit, an die Gleichspannungsverbraucher 17,21 beispielhaft angeschlossen sind. Der Wert der bereitgestellten Gleichspannung beträgt z.B. ± 24V. Die Gleichspannung wird von mindestens einer geregelten Gleichspannungseinspeisevorrichtung 3 erzeugt, welche auch den Ausgangstrom Ia auf einen Begrenzungswert begrenzt, und in eine interne Sammelschiene 7 eingespeist. Im Beispiel der Figur 1 ist exemplarisch das linke und rechte Ende der Sammelschiene 7 gezeigt und mit dem Bezugszeichen 9 eine beliebige Ausdehnung der Sammelschiene symbolisiert.

Die Gleichspannungsversorgungseinheit 1 weist ferner schnell abschaltende, insbesondere elektronische Sicherungseinrichtungen 11,13 auf, welche eingangseitig an der Sammelschiene 7 angeschlossen und ausgangseitig den eigensicheren Ausgängen 15,19 vorgeschaltet sind. Die Sicherungseinrichtungen sind so ausgelegt, daß diese zum Überlastschutz bei einem Wert eines Verbraucherstromes Iv im jeweiligen Ausgang 15,19 auslösen, der kleiner als der Begrenzungswert des Ausgangstromes Ia der geregelten Gleichspannungseinspeisevorrichtung 3 ist. Diese ist bevorzugt als ein elektronisch geregeltes Schaltnetzteil ausgeführt, welche in die interne Sammelschiene 7 eine Gleichspannung mit stabilisiertem Spannungswert einspeist.

Wird im Falle eines Kurzschlusses einer der Ausgänge 15,19 über die zugehörige Sicherungseinrichtung schnell abgeschaltet und somit der angeschlossene Verbraucher abgetrennt, so ist die Versorgung des Verbrauchers am anderen Ausgang der Gleichspannungsversorgungseinheit 1 nicht gefährdet.

Figur 2 zeigt beispielhaft eine weitere Ausführung einer Gleichspannungsversorgungseinheit 1 gemäß der Erfindung. Dabei wird die interne Spannungsschiene 7 in diesem Fall von drei geregelten Gleichspannungseinspeisevorrichtungen 3a, 3b, 3c parallel gespeist, welche alle eingangsseitig am Wechselspannungsnetz 5 angeschlossen sind. Hiermit ist eine redundante Gleichspannungsversorgung der internen Sammelschiene auch bei Ausfall von zumindest einer der Gleichspannungseinspeisevorrichtungen 3a,3b,3c möglich. Als Sicherungseinrichtungen 11,13 sind im Beispiel der Figur 2 sogenannte elektronische Schalter eingesetzt, welche am Ausgang 15 ein Schütz 17b mit einer Einrichtung 17a zur Zustandsanzeige als Verbraucher und am Ausgang 19 einen Antrieb 21a als Verbraucher absichern.

## Patentansprüche

1. Gleichspannungsversorgungseinheit (1), mit
a) einer internen Sammelschiene (7) für die Gleichspannung der Gleichspannungsversorgungseinheit (1),
b) mindestens einer geregelten Gleichspannungseinspeisevorrichtung (3;3a,3b,3c) in die interne Sammelschiene (7), welche zumindest den Ausgangstrom (Ia) auf einen Begrenzungswert begrenzt, und mit
c) mindestens einer schnell abschaltenden, insbesondere elektronischen Sicherungseinrichtung (11,13), welche
c1) eingangseitig an der internen Sammelschiene (7) angeschlossen ist,
c2) ausgangseitig mindestens einen eigensicheren Ausgang (15,19) zum Anschluß von externen elektrischen Verbrauchern (17;17a,17b;21;21a) bereitstellt, und die
c3) zum Überlastschutz bei einem Wert des Verbraucherstromes (Iv) auslöst, der kleiner ist der Begrenzungswert des Ausgangstromes (Ia) der geregelten Gleichspannungseinspeisevorrichtung (3;3a,3b,3c).

2. Gleichspannungsversorgungseinheit nach Anspruch 1 mit einem bevorzugt elektronisch geregelten Schaltnetzteil als geregelte Gleichspannungseinspeisevorrichtung (3;3a,3b,3c).

3. Gleichspannungsversorgungseinheit nach Anspruch 1 oder 2, wobei die geregelte Gleichspannungseinspeisevorrichtung (3;3a,3b,3c) in die interne Sammelschiene (7) eine Gleichspannung mit stabilisiertem Spannungswert einspeist.

4. Gleichspannungsversorgungseinheit nach einen der vorangegangenen Ansprüche, wobei der Begrenzungswert für den Ausgangstromwert (Ia) der geregelten Gleichspannungseinspeisevorrichtung (3;3a,3b,3c) nur geringfügig über derem Nennstromwert liegt.

5. Gleichspannungsversorgungseinheit nach einem der vorangegangenen Ansprüche, mit einem elektronischen Schutzschaltrelais als schnell abschaltende Sicherungseinrichtung (11,13) gegen Kurzschlüsse in einem externen elektrischen Verbraucher (17;17a,17b;21;21a).
